# EUROPÄISCHE PATENTSCHRIFT

(11) **EP 1 334 589 B1**
(45) Veröffentlichungstag und Bekanntmachung des Hinweises auf die Patenterteilung: **02.01.2008**
(21) Anmeldenummer: 01982416.8
(22) Anmeldetag: 10.10.2001
(51) Int. Cl.: H04L 12/413, G05B 19/418

(54) **DATENÜBERTRAGUNG**
DATA TRANSMISSION
TRANSMISSION DE DONNEES

(30) Priorität: 10.11.2000 DE 10055938
(43) Veröffentlichungstag der Anmeldung: 13.08.2003
(73) Patentinhaber: Hirschmann Electronics GmbH & Co. KG, 72654 Neckartenzlingen (DE)
(72) Erfinder: REUSCHEN, Rolf, 72639 Neuffen (DE); SCHMID, Bernhard, 73061 Ebersbach (DE)
(74) Vertreter: Thul, Hermann
(86) Internationale Anmeldenummer: PCT/EP2001/011690
(87) Internationale Veröffentlichungsnummer: WO 2002/039676

(56) Entgegenhaltungen:
- EP-A- 0 087 664
- EP-A- 0 965 951
- WO-A-99/19782
- US-A- 4 063 220
- US-A- 4 661 950
- US-A- 5 523 704
- US-A- 5 640 511
- DEMARTINI C ET AL: "The EN50170 standard for a European fieldbus" COMPUTER STANDARDS AND INTERFACES, ELSEVIER SEQUOIA. LAUSANNE, CH, Bd. 19, Nr. 5-6, 15. Oktober 1998 (1998-10-15), Seiten 257-273, XP004144061 ISSN: 0920-5489
- CENA G ET AL: "A distributed mechanism to improve fairness in CAN networks" FACTORY COMMUNICATION SYSTEMS, 1995. WFCS '95, PROCEEDINGS., 1995 IEEE INTERNATIONAL WORKSHOP ON LEYSIN, SWITZERLAND 4-6 OCT. 1995, NEW YORK, NY, USA,IEEE, US, 4. Oktober 1995 (1995-10-04), Seiten 3-11, XP010154278 ISBN: 0-7803-3059-5

## Beschreibung

### Technisches Gebiet

Die Erfindung betrifft ein Netzwerk mit mehreren über eine passive Übertragungsvorrichtung angeschlossenen Geräten gemäß den Merkmalen des Oberbegriffes des Patentanspruches 1.

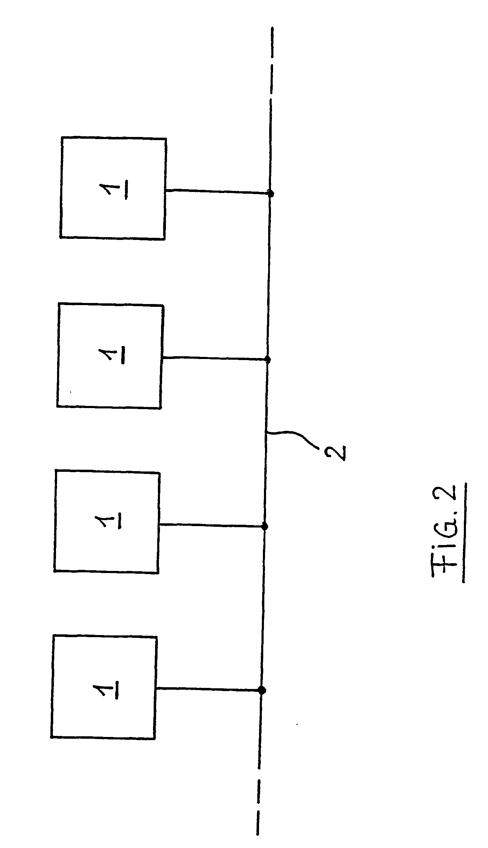

Insbesondere in einem Bereich der Prozeßautomatisierung werden für die Vernetzung von Geräten (s. Figur 2, wo die Geräte mit der Bezugsziffer 1 bezeichnet sind) Feldbussysteme (Bezugsziffer 2 der Figur 2) eingesetzt, die speziell für diese Anwendungsgebiete entwickelt und ausgelegt worden sind. Bei den Geräten handelt es sich beispielsweise um Steuerungen, Antriebe, Ein- oder Ausgabesysteme. Das Feldbussystem zeichnet sich durch seine mechanische Robustheit, seine elektrische Störunempfindlichkeit sowie durch die Einfachheit bezüglich seiner Installation, Inbetriebnahme und Wartung aus. Gerade im Bereich rauher Umgebungsbedingungen hat sich das Feldbussystem bewährt.

### Stand der Technik

Aus der EP-A-0 087 664 ist ausweislich der Figur 1 ein Netzwerk mit mehreren Geräten bekannt, die an einer Übertragungsvorrichtung angeschlossen sind. Die Geräte empfangen über einen Transceiver Daten von der Übertragungsvorrichtung und leiten diese an das angeschlossene Gerät weiter, genauso wie Daten, die von dem angeschlossenen Gerät kommen, über den Transceiver an die Übertragungsvorrichtung abgegeben werden können. Dabei kann ggf. eine Datenumwandlung stattfinden, die sich jedoch nicht eindeutig auf die Feldbus- bzw. Ethemet-Welt bezieht.

Die WO99/19782 beschreibt ein Gerät (34) gemäss Abbildung 8, bei dem eine Sende-/Empfangseinrichtung (116) an einer ersten Übertragungsvorrichtung (126) angeschlossen ist. Weiterhin ist eine weitere Sende-/Empfangseinrichtung (120) vorhanden, die an einer zweiten Übertragungsvorrichtung (40) angeschlossen ist. Die beiden Einrichtungen (116, 120) sind lediglich dazu ausgebildet, die Daten, die von der zweiten Übertragungsvorrichtung (40) empfangen worden sind, über die Einrichtung (120) an die Einrichtung (116) zu übermitteln, die diese an die erste Übertragungsvorrichtung (126) abgibt.

Allerdings stellt sich beim Einsatz von Feldbussystemen für die Anwender das Problem, daß es eine Vielfalt und Vielzahl von verschiedenen Feldbussystemen gibt, die alle zueinander inkompatibel sind. Die Kommunikation über die Grenzen eines Feldbussystems hinweg ist technisch äußerst aufwendig und daher wenig effizient. Außerdem hat die Wahl eines bestimmten Feldbussystems für den Endanwender in der Praxis den Nachteil, daß er sich an einen einzigen Hersteller bindet, was wiederum Nachteile hinsichtlich der Kosten bei Anschaffung, Unterhalt und Service mit sich bringt. Bei den Feldbussystemen existieren heutzutage Standard-Technologien zur Datenübertragung (beispielsweise ANSI-TIA-EIA-485-A), die um weitere Festlegungen, wie z. B. das Zugriffsverfahren auf die Übertragungsvorrichtung, mechanische und elektrische Anforderungen an Kabel- und Steckerverbinder, Steckerbelegungen, Datenraten, maximale Anzahl von Geräten an einem Feldbus und zulässige Leitungslängen ergänzt sind.

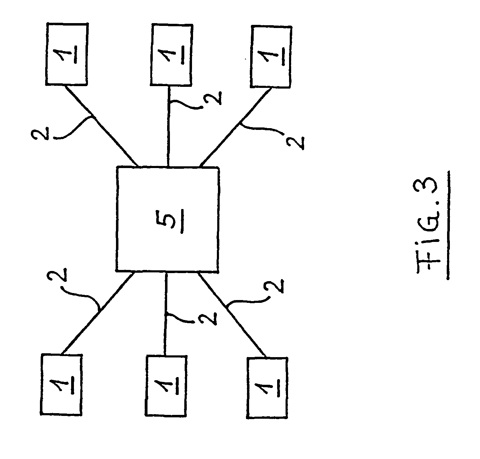

Parallel zu den Feldbussystemen, gibt es insbesondere im Bereich der Bürokommunikation das Rechnernetzwerk ETHERNET, das nach dem Standard IEEE 802.3/Iso/IEC 8802-3 arbeitet, der zusammen mit der TCP/IP-Protokollfamilie zu einer dominanten Technologie entwickelt wurde, die im Rahmen des Internet zwischen verschiedensten Geräten (z. B. PC, Workstation, Mainfraime mit unterschiedlichen Betriebssystemen) eine weltweite Datenkommunikation ermöglicht. Hierbei handelt es sich um Bussysteme mit aktiven Verteilern, die z. B. in Figur 3 gezeigt sind. Bei diesen Bussystemen gibt es Punkt zu Punkt-Verbindungen, bei denen die Geräte mit der Bezugsziffer 1 über Verbindungen 2 an einem aktiven Verteiler angeschlossen sind. Dabei wird die Weiterleitung der Daten von einem zu einem anderen Gerät von diesem aktiven Verteiler 5 vorgenommen.

Ein solcher aktiver Verteiler wird bei der Prozeßautomatisierung bzw. allgemein bei Anwendungen der Automatisierungstechnik nicht eingesetzt, da diese Verteiler einen zusätzlichen Kostenfaktor darstellen und auch die Zuverlässigkeit des Gesamtsystemes herabsetzen.

### Darstellung der Erfindung

Der Erfindung liegt daher die Aufgabe zugrunde, ein Netzwerk mit mehreren angeschlossenen Geräten bereitzustellen, das die Vorteile eines Feldbussystemes mit den Vorteilen des Ethernet vereint.

Diese Aufgabe ist durch die Merkmale des Patentanspruchs 1 gelöst.

Erfindungsgemäß ist vorgesehen, daß die an die Übertragungsvorrichtung angeschlossenen Geräte jeweils eine an die Übertragungsvorrichtung angeschlossene Sende-/Empfangseinrichtung sowie einen Wandler aufweisen, mit denen die Datenübergabe sowie eine Datenumwandlung von einem Datenformat in ein anderes Datenformat (und umgekehrt) der von der Übertragungsvorrichtung an das Gerät abgegebenen Daten und/oder der vom Gerät an die Übertragungsvorrichtung abgegebenen Daten gesteuert wird, wobei das eine Datenformat auf Seiten der Übertragungsvorrichtung ein Feldbus-Datenformat und das andere Datenformat auf der anderen Seite ein Ethernet-Datenformat ist. Dadurch ist es möglich, zum einen Komponenten, die sich in der Prozeßautomatisierung (z. B. Datenleitungen, Verbindungstechnik, elektronische Bausteine) bewährt haben, die also robust sind, zu verwenden, wobei zum anderen die hohen Datenraten und die weltweite Datenkommunikation sowie die Kompatibilität des Ethernet beibehalten werden können. Da die Geräte gemeinsam an der Übertragungsvorrichtung angeschlossen werden, entsteht ein passives robustes Netzwerk ohne aktive Verteilelemente, so daß auch die Kosten gesenkt werden können. Das Übertragungsmedium (die Übertragungsvorrichtung), ist insbesondere eine verdrillte Zweidrahtleitung, die kostengünstig anzuschaffen und einfach zu verlegen ist.

Mit anderen Worten wird der Vorteil erzeugt, daß die Übertragungstechnologie gängiger Feldbussysteme für den Transport von Ethemetdaten benutzt wird, d. h. die Welt der Feldbussysteme mit der des Ethernet verbunden wird. Dazu ist erfindungsgemäß der Wandler vorgesehen, der die beiden Welten miteinander verbindet und übliche Verkabelungstechniken bei Feldbussystemen verwendet.

In Weiterbildung der Erfindung ist der Wandler zur Kodierung der übertragenen Daten ausgebildet. Die Kodierung, insbesondere die Leitungskodierung dient dazu, die Eigenschaften des die Nutzdaten tragenden Sendesignales an die Übertragungsvorrichtung anzupassen und dem empfangenden Gerät die Synchronisation auf die Netzdaten zu ermöglichen. Hierbei kommt z. B. bei Ethernet die Manchestercodierung zum Einsatz, die zu einer Verteilung der spektralen Energie des Sendesignales im Bereich oberhalb von 5 Mhz führt. Die Datenraten von Feldbussystemen liegen im Bereich von etwa 10 Kilobit pro Sekunde bis zu einigen Megabit pro Sekunde, so daß für Feldbussysteme konzipierte Datenleitungen zur Übertragung niedrigerer Signalfrequenzen als Ethemet-Datenleitungen ausgelegt sind, so daß der Wandler vorzugsweise eine NRZ-Kodierung verwendet, aufgrund dessen die benötigte Bandbreite der Datenleitung halbiert wird. Dadurch können über die Übertragungsvorrichtung eingehende hohe Datenraten an das angeschlossene Gerät übertragen und in diesem mit der ebenfalls hohen Geschwindigkeit verarbeitet werden. Gleichzeitig ist es möglich, von einem angeschlossenen Gerät die erzeugten hohen Datenraten mit der erforderlichen Geschwindigkeit über die Übertragungsvorrichtung an ein weiteres angeschlossenes Gerät zu übertragen.

In Weiterbildung der Erfindung ist der Wandler zur Kollisionserkennung, wenn wenigstens zwei Geräte gleichzeitig auf das Netzwerk zugreifen, und zur Reaktion darauf ausgebildet. Eine Kollision liegt dann vor, wenn wenigstens zwei angeschlossene Geräte gleichzeitig auf das Netzwerk zugreifen wollen und sich dadurch ihre Sendedaten gegenseitig zerstören. Eine solche Kollision muß von den zugreifenden Geräten erkannt werden, um den Sendevorgang definiert abzubrechen und nach einer vorgebbaren Zeitspanne wiederholen zu können, damit der Datenverlust vermieden wird. So ist es zum einen denkbar, daß die Sendedaten hochohmig über Stromquellen in den Feldbus eingespeist werden. Bei einer Kollision überlagern sich die Sendesignale der kollidierenden Geräte und führen zu einer Erhöhung des Mittelwertes der Signalspannung, die durch entsprechende Mittel detektiert werden kann.

In Weiterbildung der Erfindung ist vorgesehen, daß durch einen entsprechenden Feldbusabschluß ein definierter Ruhepegel auf die Datenleitung eingeprägt wird. Solche angeschlossenen Geräte, die nicht senden, haben dazu die Leitungstreiber in einen hochohmigen Zustand versetzt. Sendende Geräte prägen nur den vom Ruhepegel abweichenden Logikpegel aktiv und niederohmig in die Datenleitung ein. Soll der zum Ruhepegel identische Logikpegel gesendet werden, wird der Leitungstreiber in den hochohmigen Zustand versetzt und der gewünschte Logikpegel durch die Leitungsabschlüsse relativ hochohmig auf die Datenleitung eingeprägt. Dadurch entstehen dominante und rezessive Logikpegel, so daß bei einer Kollision der niederohmig eingeprägte Logikpegel auf der Datenleitung dominiert, den das sendende Gerät durch den Vergleich von Sendedaten und Empfangsdaten erkennen kann. Hierzu sind Mittel zum Vergleich von Sende- und Empfangsdaten im Gerät vorhanden.

In Weiterbildung der Erfindung sind Mittel des Wandlers vorgesehen, die einem Datenpaket, bestehend aus einem vorgebbaren Bitmuster, welches von einem bestimmten Gerät empfangen werden soll, am Anfang des Datenpaketes ein variables Bitmuster des Gerätes zuordnen, bzw. es wird dem Datenpaket am Anfang ein variables Bitmuster vorangestellt. Bisher bekannte Datenpakete (z. B. nach IEEE 802.3) bestehen z. B. aus 7 Byte Präambel, einem Byte Start Frame Delimiter, 6 Byte Zieladresse, 6 Byte Quellenadresse, 46 bis 1500 Byte Daten sowie aus Prüfsumme in der Länge von 4 Byte. Ein solcher Aufbau des Datenpaketes hat den Nachteil, daß sich die Daten zweier kollidierender Geräte frühestens in der Quelladresse sicher unterscheiden. Zu diesem Zeitpunkt können allerdings schon bis zu 20 Byte übertragen worden sein, bevor eine Kollision zwischen zwei Geräten sicher erkannt wird, so daß sich daraus eine unzulässig lange Kollisionserkennungszeit ergibt.

Die Erfindung sieht nun vor, daß die ersten Bytes des Datenpaketes, die beispielsweise aus einer 10-Folge bestehen und keine Informationen enthalten, durch ein variables Bitmuster ersetzt werden. Dieses Bitmuster kann aus einem beliebigen, variablen Bitmuster bestehen, wobei sich das dem Gerät zugehörige Bitmuster von dem Bitmuster aller anderen, an der Kollision beteiligten Geräte unterscheidet. Im Zusammenhang mit den Mitteln zur Kollisionserkennung (Patentanspruch 4) ist dadurch nun eine Kollisionserkennung durch den Wandler mittels einfachen Vergleiches der Sendedaten und Empfangsdaten möglich. Es ist lediglich darauf zu achten, daß Mittel vorgesehen sind, die beim Datenempfang im Gerät dieses variable Bitmuster wieder durch eine 10-Folge, insbesondere die ursprüngliche 10-Folge, ersetzt werden, so daß für die Steuereinheit diese Präambel unverändert bleibt.

In Weiterbildung der Erfindung erfolgt die Erzeugung und Zuordnung des variablen Bitmusters automatisch. Durch die automatische Erzeugung des variablen Bitmusters nach dem Zufallsprinzip wird zum einen sichergestellt, daß der Benutzer des Gerätes diesen Vorgang nicht von sich selbst auslösen muß, sondern daß dieser Vorgang im Hintergrund automatisch abläuft. Die Erzeugung nach einem Zufallsprinzip beispielsweise hat darüber hinaus den Vorteil, daß sichergestellt ist, daß zwei Geräte nicht ein und dieselbe Zieladresse erhalten, so daß damit die Kollisionserkennung wirksam durchgeführt werden kann.

In Weiterbildung der Erfindung wird der rezessive Logikpegel am Beginn eines Datenbits des Datenpakets für einen Bruchteil der Bitdauer ebenfalls niederohmig eingeprägt.

Bei der Verwendung der Kollisionskennung auf Basis der dominanten und rezessiven Logikpegel kann es zu den Problem kommen, daß durch das hochohmige Einprägen der rezessiven Logikpegel, insbesondere beim Anschluß einer sehr hohen Zahl von Geräten an die Datenleitung und der damit verbundenen hohen kapazitiven Belastung der Verlauf der Signalpegel stark verzehrt und damit die Qualität der Datenübertragung beeinträchtigt werden kann. Dieses Problem ist nun erfindungsgemäß dadurch gelöst, daß der rezessive Logikpegel am Beginn des Datenbits für einen Bruchteil der Bitdauer ebenfalls niederohmig eingeprägt wird, während für die restliche Dauer des Datenbits in dem Gerät Mittel (Transceiver) vorgesehen sind, mit denen diese Dauer des Datenbits hochohmig geschaltet wird. Durch entsprechende Wahl der Dauer dieses Bruchteiles der Bitdauer können somit Signalverzehrungen wirksam vermieden werden, ohne die Kollisionserkennung zu beeinträchtigen.

In Weiterbildung der Erfindung ist der Wandler zur Serien-/Parallel-Wandlung oder umgekehrt der abzugebenden oder zu empfangenden Daten ausgebildet. Damit können die Daten von der "Feldbus-Welt" in die "Ethernet-Welt" und umgekehrt übertragen werden. Diese Wandlung gilt sowohl für die Sendedaten als auch für die Empfangsdaten.

Ein Netzwerk, auf das die Erfindung jedoch nicht beschränkt ist und im Rahmen der zugrundeliegenden Idee abgewandelt werden kann, ist im folgenden beschrieben und anhand der Figuren erläutert.

### Kurze Beschreibung der Zeichnung

Es zeigen:
- Figur 1: ein erfindungsgemäßes Netzwerk,
- Figur 2: ein Netzwerk mit Feldbus gemäß dem Stand der Technik und
- Figur 3: ein Ethernet-Netzwerk mit aktivem Verteiler gemäß dem Stand der Technik.

### Wege zur Ausführung der Erfindung

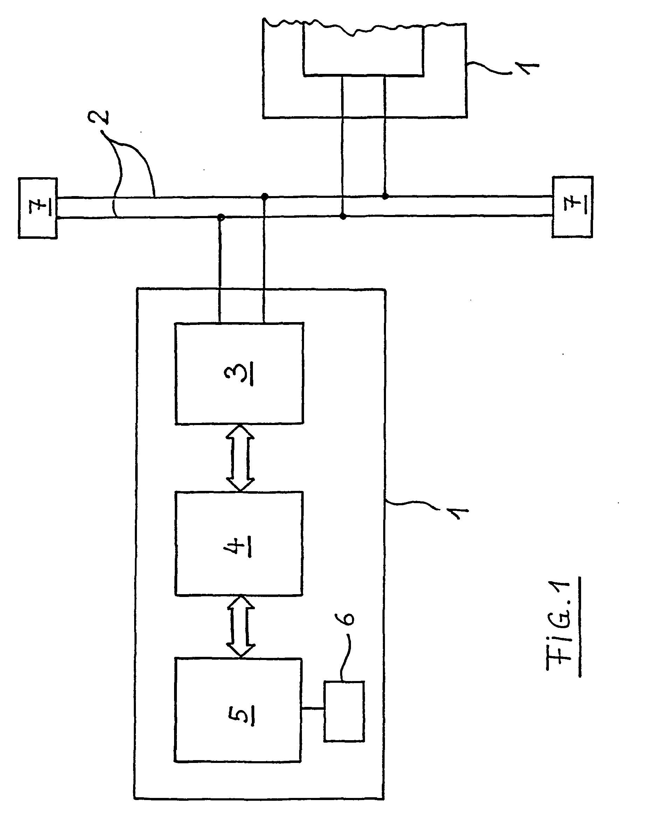

Figur 1 zeigt ein Netzwerk mit mehreren Geräten 1, die über eine Übertragungsvorrichtung 2, der insbesondere als verdrillte Zweidrahtleitung ausgebildet ist, angeschlossen sind. Bei den angeschlossenen Geräten 1 werden solche Komponenten gezeigt und beschrieben, die für die Datenübertragung und die Steuerung des Netzwerkes erforderlich sind. Anwendungsspezifische Komponenten der Geräte (wie beispielsweise Sensoren, Aktuatoren, Eingabemittel, Antriebe und dergleichen) sind der Einfachheit halber weggelassen worden. Bei den Geräten 1 handelt es sich insbesondere um solche, die im Rahmen einer Prozeßautomatisierung, also allgemein in der Automatisierungstechnik, zum Einsatz kommen. Die Geräte 1 können auch PC's sein.

In dem Gerät 1 ist eine Sende-/Empfangseinrichtung 3 vorgesehen, über die die Daten des Gerätes 1 an die Übertragungsvorrichtung 2 abgegeben werden und die Daten, die für das jeweilige Gerät 1 bestimmt sind, über die Übertragungsvorrichtung 2 empfangen werden. Diese Einrichtung 3 wird auch als Tranceiver bezeichnet, der nach dem Standard ANSI-TIA-EIA-485-A ausgebildet sein kann. Ebenso beinhaltet die Einrichtung 3 in vorteilhafterweise eine Potentialtrennung.

Innerhalb des Gerätes 1 ist an dieser Sende-/Empfangseinrichtung 3 der erfindungsgemäße Wandler 4 angeschlossen, der die "Feldbus-Welt" mit der "Ethernet-Welt" verbindet. Dieser Wandler 4 steuert die Datenübergabe von dem Gerät 1 an die Übertragungsvorrichtung 2 und umgekehrt durch eine Seriell-/Parallel-Wandlung der Sende-/Empfangsdaten, durch die Leitungskodierung/-dekodierung (NRZ) sowie durch die Kollisionserkennung, Impulsformung.

An dem Wandler 4 wiederum ist eine Steuereinheit 5 angeschlossen, die von einer CPU 6 gesteuert wird. Diese Steuereinheit 5 steuert den Zugriff des Gerätes 1 auf das Netzwerk (auf die Übertragungsvorrichtung 2) und den Emfpang der Daten. Außerdem steht die Steuereinheit 5 mit einem Teil oder mit allen anderen beteiligten Komponenten des Gerätes 1 in Verbindung, so daß durch Eingabe von Prozeßdaten in die Steuereinheit 5 diese Prozeßdaten in dem Wandler 4 umgesetzt und über die Einrichtung 3 an die Übertragungsvorrichtung 2 zur Weiterverarbeitung in anderen angeschlossenen Geräten abgegeben werden. Umgekehrt erfolgt die Weiterleitung von empfangenen Daten über die Steuereinheit 5 an die beteiligten Komponenten des Gerätes 1.

Die in Figur 1 gezeigten Mittel mit den Bezugsziffern 3 bis 6 können einzeln, in Gruppen zusammengefaßt oder alle zusammen in einem elektronischen Baustein, einem Mikroprozessor oder einem Mikrocontroller integriert sein.

Darüber hinaus ist an einem oder sind an beiden Enden des Feldbusses 2 ein Busabschluß 7 bzw. zwei Abschlüsse 7 vorhanden, der den wellenwiderstandsrichtigen Abschluß bildet und durch den zusätzlich ein definierter Ruhepegel auf den Feldbus eingeprägt werden kann.

Die Figuren 2 und 3 wurden schon im Rahmen der Beschreibung des bekannten Standes der Technik erläutert.

## Patentansprüche

1. Netzwerk mit mehreren über eine Übertragungsvorrichtung (2) angeschlossenen Geräten (1), **dadurch gekennzeichnet, daß** jedes angeschlossene Gerät (1) eine an die Übertragungsvorrichtung (2) angeschlossene Sende-/Empfangseinrichtung (3) sowie einen Wandler (4) aufweist, wobei mit dem Wandler (4) eine Datenübergabe sowie eine Datenumwandlung von einem Datenformat in ein anderes Datenformat und umgekehrt der von der Übertragungsvorrichtung (2) an das Gerät (1) abgegebenen Daten und/oder der vom Gerät (1) an die Übertragungsvorrichtung (2) abgegebenen Daten gesteuert wird, wobei das Datenformat auf Seiten der Übertragungsvorrichtung ein Feldbus-Datenformat und das Datenformat in dem Gerät (1) ein Ethernet-Datenformat ist und die Datenbearbeitung intern in dem Gerät (1) im Ethernet-Datenformat erfolgt.

2. Netzwerk nach Anspruch 1, **dadurch gekennzeichnet, daß** der Wandler (4) zur Kodierung der übertragenen Daten ausgebildet sind.

3. Netzwerk nach Anspruch 1 oder 2, **dadurch gekennzeichnet, daß** der Wandler (4) zur Kollisionserkennung, wenn wenigstens zwei Geräte (1) gleichzeitig auf das Netzwerk zugreifen und zur Reaktion darauf ausgebildet sind.

4. Netzwerk nach Anspruch 3, **dadurch gekennzeichnet, daß** für den Wandler (4) Mittel vorgesehen sind, mit denen ein definierter Ruhepegel auf die Übertragungsvorrichtung (2) eingeprägt wird, so daß dominante und rezessive Logikpegel entstehen, wobei bei einer Kollision einer niederohmig eingeprägter Logikpegel auf der Übertragungsvorrichtung (2) dominiert, den das sendende Gerät (1) durch den Vergleich von Sendedaten und Empfangsdaten erkennt.

5. Netzwerk nach einem der vorhergehenden Ansprüche, **dadurch gekennzeichnet, daß** der Wandler (4) Mittel aufweist, die einem Datenpaket (Daten), welches von einem bestimmten Gerät empfangen werden soll, am Anfang des Datenpaketes ein variables Bitmuster zuordnet.

6. Netzwerk nach Anspruch 5, **dadurch gekennzeichnet, daß** die Erzeugung und die Zuordnung der variablen Bitmuster automatisch und insbesondere nach dem Zufallsprinzip erfolgt.

7. Netzwerk nach einem der Ansprüche 4 bis 6, **dadurch gekennzeichnet, daß** der rezessive Logikpegel am Beginn eines Datenbits des Datenpakets für einen Bruchteil der Bitdauer ebenfalls niederohmig eingeprägt wird.

8. Netzwerk nach einem der vorhergehenden Ansprüche, **dadurch gekennzeichnet, daß** der Wandler (4) zur Serien-/Parallel-Wandlung oder umgekehrt der abzugebenden oder zu empfangenden Daten ausgebildet sind.

9. Netzwerk nach einem der vorhergehenden Ansprüche, **dadurch gekennzeichnet, daß** die Übertragungsvorrichtung (2) eine insbesondere verdrillte Zweidrahtleitung ist.

10. Netzwerk nach einem der vorhergehenden Ansprüche, **dadurch gekennzeichnet, daß** der Wandler (4) als eigenständiger elektronischer Baustein, als Mikroprozessor oder als Mikrocontroller ausgebildet ist.

## Claims

1. Network having a plurality of appliances (1) which are connected via a transmission apparatus (2), **characterized in that** each connected appliance (1) has a transmitting/receiving device (3), which is connected to the transmission apparatus (2), as well as a converter (4), with the converter (4) being used to control a data transfer and data conversion from one data format to a different data format and vice versa for the data which is emitted from the transmission apparatus (2) to the appliance (1) and/or for the data which is emitted from the appliance (1) to the transmission apparatus (2), with the data format at the transmission apparatus end being a fieldbus data format, and with the data format in the appliance (1) being an Ethernet data format, and with the data processing being carried out internally in the appliance (1) using the Ethernet data format.

2. Network according to Claim 1, **characterized in that** the converter (4) is designed for coding the transmitted data.

3. Network according to Claim 1 or 2, **characterized in that** the converter (4) is designed for collision identification, when at least two appliances (1) access the network at the same time, and for reaction to this.

4. Network according to Claim 3, **characterized in that** the converter (4) is provided with means which are used to apply a defined quiescent level to the transmission apparatus (2), such that dominant and recessive logic levels are created, with a logic level which is applied with a low impedance dominating on the transmission apparatus (2) in the event of a collision and being identified by the transmitting appliance (1) by comparison of transmitted data and received data.

5. Network according to one of the preceding claims, **characterized in that** the converter (4) has means which allocate a variable bit pattern at the start of the data packet to a data packet (data) which is intended to be received by a specific appliance.

6. Network according to Claim 5, **characterized in that** the variable bit patterns are produced and allocated automatically, and in particular using the random principle.

7. Network according to one of Claims 4 to 6, **characterized in that** the recessive logic level at the start of a data bit of the data packet is likewise applied with a low impedance for a fraction of the bit duration.

8. Network according to one of the preceding claims, **characterized in that** the converter (4) is designed for serial/parallel conversion, or vice versa, of the data to be emitted or to be received.

9. Network according to one of the preceding claims, **characterized in that** the transmission apparatus (2) is a two-wire line, in particular a twisted two-wire line.

10. Network according to one of the preceding claims, **characterized in that** the converter (4) is in the form of an autonomous electronic module, a microprocessor or a microcontroller.

## Revendications

1. Réseau comprenant plusieurs appareils (1) raccordés par le biais d'un dispositif de transmission (2), **caractérisé en ce que** chaque appareil (1) raccordé présente un dispositif d'émission/réception (3) raccordé au dispositif de transmission (2) ainsi qu'un convertisseur (4), le convertisseur (4) commandant un transfert de données ainsi qu'une conversion de données d'un format en un autre format et inversement des données délivrées par le dispositif de transmission (2) à l'appareil (1) et/ou des données délivrées par l'appareil (1) au dispositif de transmission (2), le format des données du côté du dispositif de transmission étant un format de données pour bus de terrain et le format des données dans l'appareil (1) étant un format de données Ethernet et le traitement des données s'effectuant en interne dans l'appareil (1) au format de données Ethernet.

2. Réseau selon la revendication 1, **caractérisé en ce que** le convertisseur (4) est configuré pour coder les données transmises.

3. Réseau selon la revendication 1 ou 2, **caractérisé en ce que** le convertisseur (4) est configuré pour détecter les collisions lorsqu'au moins deux appareils (1) accèdent simultanément au réseau et pour réagir à celles-ci.

4. Réseau selon la revendication 3, **caractérisé en ce que** des moyens sont prévus pour le convertisseur (4), avec lesquels un niveau de veille défini est appliqué au dispositif de transmission (2) de manière à obtenir un niveau logique dominant et récessif, un niveau logique appliqué à faible impédance étant dominant sur le dispositif de transmission (2) en cas de collision, lequel est détecté par l'appareil (1) émetteur en comparant les données émises et les données reçues.

5. Réseau selon l'une des revendications précédentes, **caractérisé en ce que** le convertisseur (4) présente des moyens qui affectent un modèle binaire à un paquet de données (données), qui doit être reçu par un appareil donné, au début paquet de données.

6. Réseau selon la revendication 5, **caractérisé en ce que** la génération et l'affectation du modèle binaire variable s'effectuent automatiquement et notamment selon le principe aléatoire.

7. Réseau selon l'une des revendications 4 à 6, **caractérisé en ce que** le niveau logique récessif est également appliqué à faible impédance au début d'un bit de données du paquet de données pendant une fraction de la durée du bit.

8. Réseau selon l'une des revendications précédentes, **caractérisé en ce que** le convertisseur (4) est configuré pour la conversion série/parallèle ou inversement des données à délivrer ou à recevoir.

9. Réseau selon l'une des revendications précédentes, **caractérisé en ce que** le dispositif de transmission (2) est un câble à deux fils notamment torsadé.

10. Réseau selon l'une des revendications précédentes, **caractérisé en ce que** le convertisseur (4) est réalisé sous la forme d'un composant électronique autonome, sous la forme d'un microprocesseur ou sous la forme d'un microcontrôleur.
